# EUROPÄISCHE PATENTANMELDUNG

(11) **EP 0 712 670 A1**
(43) Veröffentlichungstag der Anmeldung: **22.05.1996**
(21) Anmeldenummer: 95114608.3
(22) Anmeldetag: 16.09.1995
(51) Int. Cl.: B05D 3/04, A61C 13/00

(54) **Gerät zur Behandlung von Dentalprothesenteilen**

(30) Priorität: 18.11.1994 DE 4441123
(71) Anmelder: HERAEUS KULZER GMBH, 63450 Hanau (DE)
(72) Erfinder: Erdrich, Albert, Dr., D-61231 Bad Nauheim (DE); Fremdt, Sonja, D-35796 Weinbach 2 (DE); Oppawsky, Steffen, D-61350 Bad Homburg (DE)
(74) Vertreter: Grimm, Ekkehard, Dipl.-Phys.

(57) **Zusammenfassung**

Es ist ein Gerät zur Behandlung von Dentalprothesenteilen, wie Brücken, Kronen und Prothesensättel, mit gerichteter Wärmeströmung aus einer Düse bekannt. Um einen Überzug aus Kunststoff auf einem Dentalprothesenteil auszuhärten, insbesondere auf einem solchen Dentalprothesenteil, das eine komplexe Oberflächenstruktur besitzt, weist das Gerät zur Verfestigung eines Überzugs aus Kunststoff auf dem Dentalprothesenteil eine Einrichtung auf, die eine an einer Heizwendel erhitzte, aus der Düse austretende Luftströmung erzeugt, deren Temperaturquerschnittsprofil in vorgegebenem Abstand von der Düse derart ist, daß die Temperatur der Luftströmung im zentralen Bereich tiefer als in ihrem Randbereich ist.

## Beschreibung

Die vorliegende Erfindung bezieht sich auf ein Gerät zur Behandlung von Dentalprothesenteilen, wie Brücken, Kronen und Prothesensättel, mit gerichteter Wärmeströmung aus einer Düse.

Auf dem Dentalgebiet sind Verfahren zum Beschichten metallischer Dentalprothesenteile bekannt, die eine Haftvermittlerschicht auf den Prothesenteilen aufbringen. Zur Durchführung dieser Verfahren werden Geräte eingesetzt, mit denen die zu beschichtenden Trägerkörper vorbehandelt werden.

Ein solches Verfahren bzw. das dazu erforderliche Gerät ist in der DE-C1 34 03 894 beschrieben. Dieses Gerät weist einen Hydrolysebrenner auf, bei dem durch Düsenöffnungen eine Flamme austritt, die auf das zu behandelnde Dentalprothesenteil gerichtet wird. Der Brenner besitzt eine Zufuhrleitung für Luft und eine Zufuhrleitung für Brenngas. In dem Brenngas, das dem Brenner zugeführt wird, vorzugsweise Proprangas, ist eine oxidierbare Siliziumverbindung enthalten.

Ausgehend von einem Gerät zur Behandlung von Dentalprothesenteilen dieser vorstehenden, gattungsgemäßen Art liegt der vorliegenden Erfindung die Aufgabe zugrunde, ein Gerät bereitzustellen, um einen Überzug aus Kunststoff auf einem Dentalprothesenteil auszuhärten, insbesondere auf einem solchen Dentalprothesenteil, das eine komplexe Oberflächenstruktur besitzt.

Die vorstehende Aufgabe wird bei dem angegebenen Gerät dadurch gelöst, daß es zur Verfestigung eines Überzugs aus Kunststoff auf dem Dentalprothesenteil eine Einrichtung aufweist, die eine an einer Heizwendel erhitzte, aus der Düse austretende Luftströmung erzeugt, deren Temperaturquerschnittsprofil in vorgegebenem Abstand von der Düse derart ist, daß die Temperatur der Luftströmung im zentralen Bereich tiefer ist als in ihrem Randbereich. Es hat sich herausgestellt, daß gerade der Einsatz eines heißen Luftstroms im Hinblick auf die komplexe Oberflächenstruktur von Dentalprothesenteilen, die Vertiefungen und Hinterschneidungen aufweisen, zu einer optimalen Aushärtung führt. Eine solche Luftströmung kann, unter entsprechender Ausbildung der Düse, sehr gezielt lokal appliziert werden. Hierbei ist von besonderem Vorteil, daß die heiße Luftströmung nicht nur auf die im Strömungsweg direkt liegenden Prothesenteilbereiche auftrifft, sondern sich ihren Weg auch entlang von Hinterschneidungen sucht, so daß auch dort, wo normalerweise Strahlungswärme nicht unmittelbar hin gerichtet werden kann, eine Wärmebehandlung einer aufgetragenen Schicht erfolgt. Eine wesentliche Maßnahme, um solche Flächenbereiche von Dentalprothesenteile mittels definierter Wärme auszuhärten, ist diejenige, daß eine heiße Luftströmung bereitgestellt wird, die Im zentralen Bereich des Strömungsquerschnittsprofils eine tiefere Temperatur besitzt als im Außenbereich. Übliche Heißluftgeräte, die eine Heißluftströmung zur Aushärtung von Materialien erzeugen, besitzen ein Temperaturprofil, das einen entgegengesetzten Verlauf zeigt, d.h. die höchste Temperatur tritt im zentralen Bereich des Strömungsprofils auf. Durch das Gerät mit dem erfindungsgemäßen Temperaturprofil wird vermieden, daß im Rahmen der Aushärtung zunächst eine lokale Temperaturerhöhung in dem zentralen Bereich der Luftströmung, die auf das Dentalprothesenteil auftrifft, erfolgt. Vielmehr wird durch das Temperaturprofil der zentrale Bereich auf einer relativ niedrigen Temperatur gehalten, so daß eine Aushärtereaktion von einer Außenzone zum zentralen Bereich der Fläche, die von dem Luftstrom erreicht wird, erfolgt. Gerade bei Kronen, die eine relativ kleine Oberfläche besitzen, wird mit diesem Temperaturprofil erreicht, daß die Temperaturzonen der Luftströmung, die die höheren Temperaturen besitzen, auf die Randbereiche der auszuhärtenden Fläche auftreffen.

Da normalerweise eine über eine Düse aufgeheizte Luftströmung ihre höchste Temperatur im Zentrum besitzt, wird zur Erzielung des angestrebten Temperaturprofils vorzugsweise in die Düse ein Strömungswiderstandsteil eingesetzt, das derart aufgebaut ist, daß die Luftströmung in dem zentralen Bereich des Querschnittsprofils der Düse am geringsten ist, während im äußeren Bereich des Querschnittsprofils das Strömungswiderstandsteil Öffnungen aufweist, die ein ungehindertes Durchströmen der heißen Luft erlaubt. In einer weiteren Ausgestaltung kann, in Strömungsrichtung gesehen vor dem Strömungswiderstandstell, eine Blende in den Strömungskanal eingesetzt werden, die in der Mitte eine zentrale Öffnung besitzt, so daß mittels dieser Blende die Lufströmung zunächst gezielt auf das Strömungswiderstandsteil gerichtet wird, und zwar in dem Bereich, in dem der Strömungsdurchgang versperrt ist. Auf diese Weise erfährt die Luftströmung eine gezielte Umlenkung in die Außenzonen der Düse. Zur Behandlung eines Dentalprothesenteils im Rahmen der Aushärtung eines Überzugs oder eines Beschichtungsmaterials wird das Temperaturprofil der Düse so eingestellt, daß im Randbereich des Querschnittsprofils die Temperatur unmittelbar im Austrittsbereich der Düse zwischen 250 °C und 400 °C liegt, während die Temperatur im zentralen Bereich zwischen 200 °C und 250 °C liegt. Ein solches Temperaturprofil ist insbesondere für die Aushärtung von Überzügen geeignet, die auf der Basis eines Systems aus Polyacrylnltril-Co-polymeren und Polyurethanharzen aufgebaut ist.

Vorzugsweise wird der Querschnitt der Düse als Oval oder Rechteck gewählt, mit einer Seitenlänge In der einen Richtung zwischen 10 bis 15 mm und In der anderen Richtung zwischen 6 und 10 mm. Durch diesen ovalen bzw. länglichen Querschnitt wird eine bestimmte Variationsbreite zum Einsatz der Luftströmung dem Anwender gegeben, in der er, je nach Form und Art des Dentalprothesenteils, die Düse zu dem auszuhärtenden Überzug ausrichten kann.

Um einen reproduzierbaren Abstand der Düse von dem auszuhärtenden Überzug zu gewährleisten, sind an der Düsenöffnung über deren Rand vorstehend Abstandsteile angebracht. Diese Abstandsteile können beispielsweise In Form von dünnen Stiften ausgebildet werden, die vorzugsweise eine über den Rand der Düse vorstehende Länge von 1 bis 5 mm besitzen. Die bevorzugte Länge liegt im Bereich von 2 mm. Falls vier solcher Abstandsteile gleichmäßig um den Rand der Düse verteilt sind, Ist die Möglichkeit gegeben, daß die Düse in unterschiedlichen Stellungen reproduzierbar auf eine Oberfläche aufsetzbar ist; unter Umständen reichen hierzu auch drei solcher Stifte aus. Es hat sich gezeigt, daß eine solche Düse bzw. die aus ihr ausströmende Wärme sehr dicht an die auszuhärtende Oberfläche im Hinblick auf die auszuhärtenden Materialien herangeführt werden sollte, allerdings nicht derart, daß die Düse mit ihrem Rand direkt auf das Teil aufgesetzt wird, so daß in dem Gerät ein Wärmestau entsteht. Gerade mit den angegebenen Abstandshaltern kann die Düse extrem dicht an das Teil herangeführt werden, aber dennoch ein ausreichender Spalt zum Austritt der Luftströmung zwischen dem Düsenrand und der Oberfläche des Prothesenteils verbleibt.

Um insbesondere an der langen Seite des ovalen oder länglichen Querschnittsprofils der Düse Verwirbelungen zu vermeiden, weist der Düsenrand an diesen Längsseiten geringe Überhöhungen im Bereich deren Mitten auf, die über die Ebene, die durch die beiden schmalen Kanten aufgespannt wird, vorstehen. Durch diese Überhöhung wird an diesen Seite eine engere Führung der Luftströmung erreicht, so daß die Verwirbelungen, die an den Düsenrändern auftreten, verringert werden.

Um das Düsenquerschnittsprofil den Arbeitsbedingungen und insbesondere den Werkstücken anpassen zu können, hat es sich als vorteilhaft erwiesen, die Düse abschraubbar an dem Gerät, vorzugsweise an dessen griffartigem Teil, anzubringen. Hierbei sollte in dem lösbaren Düsenteil das Strömungswiderstandsteil enthalten sein, so daß auch dieses veränderten Bedingungen des Düsenquerschnitts gleichzeitig im Rahmen des Austauschs der Düse angepaßt werden kann.

Bevorzugt wird die Luftströmung mittels Druckluft erzeugt.

Weitere Einzelheiten und Merkmale der Erfindung ergeben sich aus der nachfolgenden Beschreibung eines Ausführungsbeispiels anhand der Zeichnung. In der Zeichnung zeigt:
- Figur 1: eine schematische Darstellung des erfindungsgemäßen Geräts einschließlich aller wesentlichen Versorgungseinrichtungen,
- Figur 2: einen Längsschnitt durch die Düse des Geräts, das in Figur 1 dargestellt ist,
- Figur 3: einen Schnitt entlang der Schnittlinie III-III in Figur 2,
- Figur 4: eine Ansicht aus Richtung des Pfeils IV in Figur 2, wobei die dem Strömungswiderstandsteil folgenden Teile in unterbrochenen Linien angedeutet sind, und
- Figur 5: das Temperaturquerschnittsprofil der Düse an ihrer Austrittsseite in Längsrichtung.

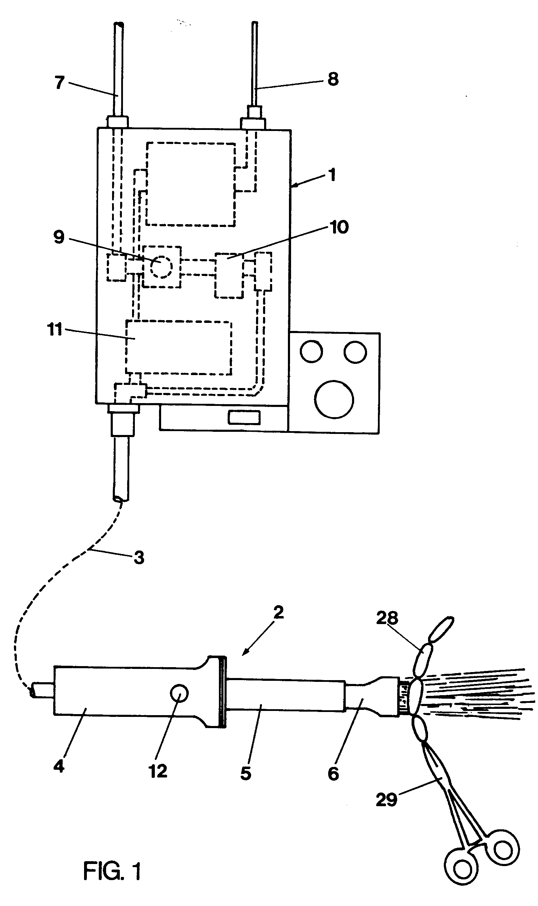

Das Gerät, wie es in der Figur 1 dargestellt ist, weist einen Versorgungsteil 1 und eine Arbeitseinheit 2 auf, die mittels einer Versorgungsleitung 3 verbunden sind. Die Arbeitseinheit 2 besitzt ein Griffteil 4, das an seiner einen Seite mit der Versorgungsleitung 3 verbunden ist, während an der anderen Seite eine Metallhülse 5 angesetzt Ist, die an ihrem freien Ende eine Düse 6 trägt. Die Versorgungseinheit 1 besitzt einen Druckluftanschluß 7 zur Verbindung mit einer externen, beispielsweise stationären, nicht dargestellten, Druckluftversorgung, darüberhinaus eine Stromzufuhr 8 von einer externen Stromversorgung. Zwischen dem Druckluftanschluß 7 und der Versorgungsleitung 3 ist in den Strömungsweg der Druckluft ein Druckregler 9 sowie ein Magnetventil 10 eingefügt. Weiterhin ist eine Temperaturregel- und Zeitsteuereinheit 11 in das Gerät eingesetzt. In das Griffteil 4 ist ein Taster 12 gut zugänglich eingesetzt, mit dem die Temperaturregel und Zeitsteuereinheit 11 in dem Versorgungsteil 1 aktiviert werden kann. Weiterhin ist in der Metallhülse 5 der Arbeitseinheit 2 eine nicht näher dargestellte Heizspirale vorgesehen. Sämtliche elektrischen Versorgungsleitungen für den Taster 12 und die Heizspirale werden über die Versorgungsleitung 3 geführt. Unter Betätigung des Tasters 12 wird zum einen die Heizspirale in der Metallhülse 5 aufgeheizt, gleichzeitig wird, unter Umständen nach einer geringen Zeitverzögerung, die Druckluftversorgung eingeschaltet, indem das Magnetventil 10 geöffnet wird. Je nach Aufbau der Steuereinheit 11 wird darüberhinaus der Druckregler 9 angesteuert; der Druckregler 9 kann auch per Hand auf einen vorgegebenen, einzuhaltenden Druckwert fest eingestellt werden.

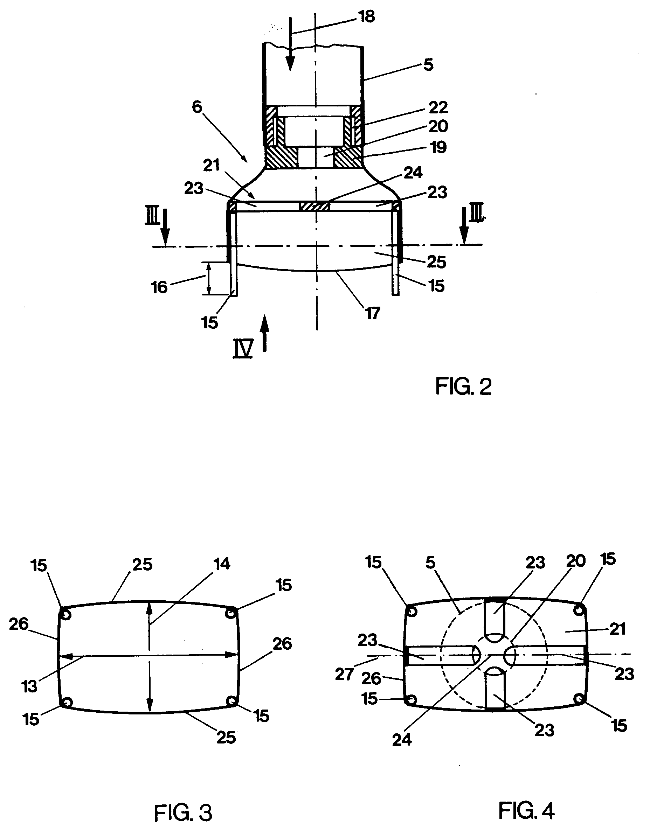

Wie die Figuren 2, 3 und 4 zeigen, besitzt die Düse 6 an ihrem Austrittsende einen gerundet-rechteckigen Querschnitt, wobei die Länge 13 etwa 12 mm in dem gezeigten Beispiel beträgt, während die lichte Breite 14 etwa 8 mm beträgt. An dem Rand 17 der Düsenöffnung sind in den vier Eckbereichen vier Abstandshalter in Form von Stiften 15 befestigt, die etwa eine Länge 16 von 2 mm besitzen, mit der sie über den Rand 17 der Düse 6 vorstehen.

In der Düse 6, in Strömungsrichtung gesehen, die durch den Pfeil 18 in Figur 2 angedeutet ist, ist zunächst eine Blende 19 mit einer zentralen Durchgangsöffnung 20 eingesetzt, die den Strömungsquerschnitt bis auf den Bereich der Öffnung 20 verschließt, der in Strömungsrichtung gesehen mit Abstand dazu und mit Abstand zu dem Rand 17 der Düse 6 ein Strömungswiderstandsteil 21 folgt. Wie weiterhin anhand der Figur 2 ersichtlich ist, Ist die Düse 6 mittels einer Schraubverbindung 22 an der Metallhülse 5 der Arbeitseinheit 2 lösbar innen eingeschraubt, wobei die Blende 19 und das Strömungswiderstandsteil 21 der Düse 6 zugeordnet ist.

In der Figur 4 ist der Aufbau des Strömungswiderstandsteils 21 ersichtlich. Dieses Strömungswiderstandsteil 21 in Form einer Platte aus Metall besitzt vier Durchgangsöffnungen 23, die gleichmäßig um den Umfang verteilt sind und sich jeweils von dem Rand des Strömungswiderstandsteils 21 zur Mitte schlitzartig erstrecken. Wie weiterhin anhand der Figuren 2 und 4 zu erkennen ist, ist zwischen der zentralen Öffnung 20 der Blende 19 und den Durchgangsöffnungen 23 des Strömungswiderstandsteils 21 in der Projektion der beiden Teile in Richtung der Strömung 18 gesehen nur eine geringe Überlappung vorhanden. Hierdurch wird erreicht, daß die durch die Öffnung 20 hindurchtretende Luftströmung zunächst auf den zentralen, geschlossenen Teil 24 des Strömungswiderstandsteils 21 prallt, so daß der heiße, zentrale Teil der Luftströmung nicht unmittelbar aus der Düse 6 austritt. Die Luftströmung wird an dem Strömungswiderstandsteil 21 durch die Durchgangsöffnungen 23 zwangsgeführt, bevor sie aus der Düse 6 austreten kann.

Der Rand 17 der Düse 6 ist an deren beiden Längsseiten 25 leicht überhöht, d.h. der Rand 17 steht geringfügig über die Ebene, die durch die beiden Schmalseiten 26 aufgespannt wird, vor. Durch diese Überhöhung der Längsseite 25 wird erzielt, daß In diesem Bereich die Luftströmung länger geführt wird.

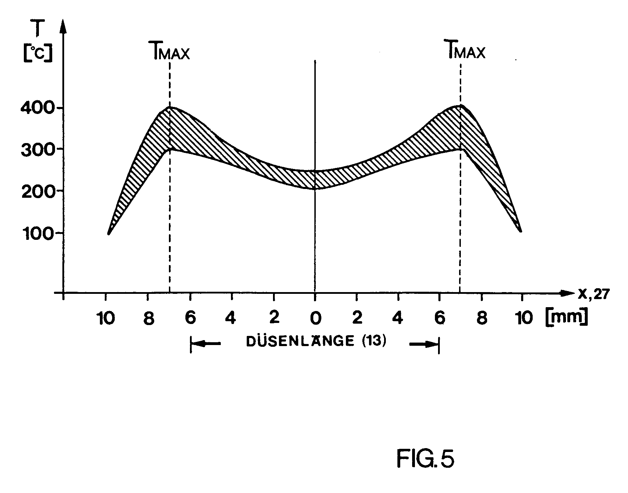

Durch den Einbau des Strömungswiderstandsteils 21 in der Düse 6 wird an der Austrittsseite der Düse 6, und zwar im Bereich der Ebene, die durch die Enden der Stifte 15 aufgespannt wird, ein Temperaturprofil erreicht, wie es In der Figur 5 schraffiert dargestellt ist. In der Figur 5 bezeichnet die Achse bzw. Mittellinie 27 die X-Achse, wie sie auch in der Figur 4 eingezeichnet ist, während die Y-Achse die Temperatur angibt. Wie das Temperaturprofil zeigt, ist in der Mitte der Düse 6 die Temperatur am niedrigsten, während sie zu den Rändern hin ansteigt. Die Temperaturdifferenz kann so eingestellt werden, daß sie zwischen dem zentralen Bereich und dem Randbereich bis zu etwa 200 °C in der gleichen Ebene beträgt.

Die Düse 6, insbesondere auch durch die Vorsehung der Stifte 15, kann auf ein zu beschichtendes bzw. zu härtendes Teil so aufgesetzt werden, daß sich die Stifte 15 auf der Oberfläche eines Dentalprothesenteils 28 (Figur 1) abstützen, das entweder auf einem stationären Halter befestigt wird oder aber mit einem Handhabungswerkzeug 29 geführt wird. Bei dem dargestellten Prothesenteil 28 handelt es sich um eine mehrgliedrige Brücke. Zur Aushärtung einer Beschichtung auf diesem Prothesenteil 28 werden die Stifte 15 auf die Oberfläche aufgesetzt, so daß ein definierter Abstand jeweils eingehalten wird. Nachdem ein bestimmter Flächenbereich wärmebehandelt ist, wird das Dentalprothesenteil 28 relativ zu der Düse verschoben und wiederum die Düse 6 mit den Stiften 15 auf den dann zu behandelnden Oberflächenbereich aufgesetzt, so daß das Prothesenteil 28 Flächenbereich für Flächenbereich wärmebehandelt und ein darauf aufgebrachter Überzug beispielsweise aus Kunststoff ausgehärtet werden kann.

## Patentansprüche

1. Gerät zur Behandlung von Dentalprothesenteilen, wie Brücken, Kronen und Prothesensättel, mit gerichteter Wärmeströmung aus einer Düse, dadurch gekennzeichnet, daß es zur Verfestigung eines Überzugs aus Kunststoff auf dem Dentalprothesenteil (28) eine Einrichtung aufweist, die eine an einer Heizwendel erhitzte, aus der Düse (6) austretende Luftströmung erzeugt, deren Temperaturquerschnittsprofil in vorgegebenem Abstand von der Düse (6) derart ist, daß die Temperatur der Luftströmung im zentralen Bereich tiefer ist als in ihrem Randbereich.

2. Gerät nach Anspruch 1, dadurch gekennzeichnet, daß die Temperatur der Luftströmung im zentralen Bereich zwischen 200 °C und 250 °C liegt, während die Temperatur im Randbereich des Querschnittsprofils zwischen 250 °C und 400°C liegt.

3. Gerät nach Anspruch 1 oder 2, dadurch gekennzeichnet, daß die größte Abmessung (13) der Düse (6) an ihrem Austrittsende für die Luftströmung kleiner 15 mm beträgt.

4. Gerät nach einem der Ansprüche 1 bis 3, dadurch gekennzeichnet, daß im zentralen Bereich der Luftströmung ein Strömungswiderstandsteil (21) angeordnet ist.

5. Gerät nach Anspruch 4, dadurch gekennzeichnet, daß das Strömungswiderstandstell (21) in die Düse (6) eingesetzt ist.

6. Gerät nach einem der Ansprüche 1 bis 5, dadurch gekennzeichnet, daß in der Düse (6) vor dem Strömungswiderstandsteil (21) eine den Querschnitt des Strömungskanals der Düse (6) verringernde Blende (19) mit einer zentralen Durchgangsöffnung (20) angeordnet ist.

7. Gerät nach einem der Ansprüche 1 bis 6, dadurch gekennzeichnet, daß das Strömungswiderstandsteil (21) im Bereich seines Außenumfangs mehrere Durchgangsöffnungen (23) aufweist.

8. Gerät nach Anspruch 7, dadurch gekennzeichnet, daß die Durchgangsöffnungen (23) des Strömungswiderstandsteils (21) und die zentrale Öffnung (20) der Blende (19) in Projektion aufeinander eine geringe Überlappung aufweisen.

9. Gerät nach einem der Ansprüche 1 bis 8, dadurch gekennzeichnet, daß mehrere über den Rand (17) der Düsenöffnung vorstehende Abstandshalter (15) angeordnet sind.

10. Gerät nach Anspruch 9, dadurch gekennzeichnet, daß die Abstandshalter durch temperaturbeständige Stifte (15) gebildet sind.

11. Gerät nach einem der Ansprüche 9 oder 10, dadurch gekennzeichnet, daß die Abstandshalter (15) eine vorstehende Länge von 1 bis 5 mm, vorzugsweise bis 2 mm, aufweisen.

12. Gerät nach einem der Ansprüche 10 oder 11, dadurch gekennzeichnet, daß vier Abstandshalter (15) um den Rand (17) der Düse (6) verteilt angeordnet sind.

13. Gerät nach einem der Ansprüche 1 bis 12, dadurch gekennzeichnet, daß die Düse (6) ein rechteckiges oder oval es Querschnittsprofil aufweist.

14. Gerät nach Anspruch 13, dadurch gekennzeichnet, daß der Querschnitt in zwei zueinander senkrecht stehenden Richtungen 13, 14) zum einen etwa 6 bis 10 mm und zum anderen etwa 10 bis 15 mm aufweist.

15. Gerät nach Anspruch 14, dadurch gekennzeichnet, daß die Abmessungen (13, 14) etwa 8 mm in der einen Richtung und 12 mm in der anderen Richtung betragen.

16. Gerät nach einem der Ansprüche 13 oder 15, dadurch gekennzeichnet, daß an den beiden langen Längsseiten (25) des Düsenquerschnitts der Rand (17) eine geringe Überhöhung im Bereich seiner Mitte aufweist, die über die Ebene der durch die beiden schmalen Kanten (26) aufgespannten Ebene vorsteht.

17. Gerät nach einem der Ansprüche 4 bis 16, dadurch gekennzeichnet, daß die Düse (6) in Strömungsrichtung gesehen vor dem Strömungswiderstandsteil (21) lösbar gehalten ist.

18. Gerät nach Anspruch 1, dadurch gekennzeichnet, daß es eine Druckluftversorgung (7) aufweist.
